# EUROPEAN PATENT APPLICATION

(11) **EP 2 669 790 A1**
(43) Date of publication of application: **04.12.2013**
(21) Application number: 12170111.4
(22) Date of filing: 30.05.2012
(51) Int. Cl.: G06F 9/44

(54) **Method for creating software applications using serverside processing**

(71) Applicant: Bitreactive AS, 7491 Trondheim (NO)
(72) Inventor: Krämer, Frank Alexander, 7030 Trondheim (NO)
(74) Representative: Finnie, Peter John

(57) **Abstract**

A computer implemented method on a server, wherein the server has access to one or more complete software building blocks, each corresponding to a respective partial software building block, the method comprising: receiving a system composition, the system composition including an arrangement of one or more partial software building blocks; modifying said system composition by replacing said one or more partial software building blocks with their corresponding complete software building blocks; transforming the modified system composition into a transformed system description; and, submitting the transformed system description to a client machine.

## Description

### FIELD OF THE TECHNOLOGY

The present disclosure relates to a method of creating software applications for use in electronic devices capable of running software applications.

### BACKGROUND

Software development kits (SDKs) are tools that can aid the development of software applications. Rather than requiring a user to write all the code for a software application, an SDK provides a user with collections of pre-written code or software building blocks that can enable the user's software application to perform certain functions.

An SDK can also be used to provide assistance in the actual design of the applications by providing a development environment, virtual machines and optimisation tools. SDKs are particularly useful for developers as they can potentially decrease development time and costs by assisting developers, and may also provide access to licensed and valuable APIs.

One problem associated with SDKs is that users of the SDK need to be able to access the collections of pre-written code or software building blocks in order to design software applications. However, by providing the users with a full, complete and unprotected copy of these blocks, it is possible that the user can use the blocks in violation of the terms of the license associated with the block. For example, upon receiving a block in the SDK, the user may make a copy of the block and distribute it to others or continue to use it after their subscription expires. Therefore, a balance is required between the user's need to be able to access code resources to develop applications and the protection of the intellectual property rights of the owners of the resources used.

Improvements in SDKs and other tools for aiding software development are desirable.

### SUMMARY

According to one aspect of the present invention, a computer implemented method on a server, wherein the server has access to one or more complete software building blocks, each corresponding to a respective partial software building block, the method comprising: receiving a system composition, the system composition including an arrangement of one or more partial software building blocks; modifying said system composition by replacing said one or more partial software building blocks with their corresponding complete software building blocks; transforming the modified system composition into a transformed system description; and, submitting the transformed system description to a client machine.

In this aspect of the present invention, the server has access to both partial and complete software building blocks. Because of this, when it receives a system composition, it is able to replace the partial building blocks within the system composition with complete building blocks and therefore perform the transformation of the system composition. The device that initially sent the system composition (for example, a client machine), would not be able to perform such a transformation as it would not have access to the complete building blocks. Therefore by placing complete building blocks and a transformer on the server, the server is able to enforce some level of control over the development of applications. By transforming the modified system composition, even though the server is sending information related to the complete building blocks, it would be harder for the receiving device to determine the complete building blocks from this transformed system description, and therefore the information within the complete building blocks may remain more securely securely on the server.

In some example embodiments, prior to the receiving of a system composition, the method further comprises: submitting one or more partial software building blocks to the client machine, said submitted one or more partial software building blocks corresponding to one or more complete software building blocks requested by the client machine. By sending a partial block to a client machine when a client machine requests a building block, the server ensures that the information stored in the complete building blocks remain securely on the server. By sending partial blocks to the client machine, enough information may be given for the client machine to design an application, but not enough to produce it without the help or consent of the server.

In some example embodiments, after the receiving of a system composition the method further comprises publishing one or more blocks in the system composition. By automatically publishing certain blocks in the system composition, the server can enforce licenses that specify that certain received blocks must be published.

In some example embodiments, said publishing is determined by a license associated with the received system composition.

In some example embodiments, after the receiving of a system composition the method further comprises: identifying any parts of the system composition that relate to protected complete software building blocks. By identifying parts of the system composition that relate to complete software building blocks, the server if any blocks have been illegally copied or reverse engineered from blocks whose license do not permit such copying. As the transformation occurs on the server, this provides an opportunity to perform such checks on the blocks.

In some example embodiments, the method further comprising: if a license associated with the received system composition does not permit access to at least one of the protected complete software building blocks related to an identified part of the system composition, reporting said access to at least one of the protected complete software building blocks. By reporting the access to a protected complete building block, the server can ensure that any detected acts of illegal copying or reverse engineering can be prevented.

In some example embodiments, the received system composition is a system block comprising a hierarchy including one partial software building block and at least one of: one or more further partial software building blocks, and one or more complete software building blocks.

In some example embodiments, said partial software building blocks are external interfaces to their corresponding complete software building blocks.

In some example embodiments, the transformed system description is a description of the behaviour of the system.

In some example embodiments, the transformed system description is a UML state machine, the complete software building blocks are UML activities, and the partial software building blocks are external state machines.

According to another aspect of the present invention, a server comprising a memory storing executable instructions for performing the method of any of the methods described in the example embodiments.

According to yet another aspect of the present invention, a computer implemented method on a client machine, the method comprising: submitting a system composition to a server, the system composition including an arrangement of one or more partial software building blocks; receiving a transformed system description from the server, the transformed system description being the result of a transformation on the submitted system composition, wherein the one or more partial software building blocks in the system composition have been replaced with their corresponding complete software building blocks; and, generating code based on at least the transformed system description.

In this aspect of the present invention, even though the client machine has sent a system composition with partial software building blocks, it receives a transformed system description that includes information from corresponding complete building blocks that the client machine requires to produce executable code. With this full, transformed system description, the client machine may then go on to generate code based on the transformed system description.

In some example embodiments, prior to submitting the system composition to the server, the method further comprising: analysing the system composition to check for errors in the arrangement of the one or more partial software building blocks. By checking for errors in the arrangement of the system composition, the client machine can ensure that whatever system composition is sent to a server will be able to be transformed without any errors and thereby reducing the need for trial and error.

In some example embodiments, prior to submitting the system composition to the server, the method further comprising: receiving one or more partial software building blocks from the server, said received one or more partial software building blocks corresponding to one or more requested complete software building blocks.

According to yet another aspect, a client machine comprising a memory storing executable instructions for performing the method of any of the methods described in the example embodiments.

### BRIEF DESCRIPTION OF DRAWINGS

Examples of the present proposed approach will now be described in detail with reference to the accompanying drawings, in which:
**Figure 1** is a block diagram of a server and client machine interacting with one another to generate code in accordance with the present disclosure;
**Figure 2** is a block diagram of a server and client machine interacting with one another to generate code and to enforce licenses in accordance with the present disclosure;
**Figure 3** is a block diagram of a server and client machine interacting with one another to generate code for a countdown software application;
**Figure 4a** is a block diagram illustrating the UML activity of a periodic timer building block and represents the Timer(a) block of Figure 3;
**Figure 4b** is a flow chart illustrating the an external interface of a periodic timer building block and represents the Timer(b) block of Figure 3;
**Figure 4c** is a code description for a periodic timer building block and represents the Timer(c) block of Figure 3;
**Figure 5a** is a block diagram illustrating the UML activity of a countdown building block and represents the Counter(a) block of Figure 3;
**Figure 5b** is a flow chart illustrating the an external interface of a countdown building block and represents the Counter(b) block of Figure 3;
**Figure 5c** is a code description for a countdown building block and represents the Countdown(c) block of Figure 3;
**Figure 6** is a block diagram showing a composed system as viewed by a user and represents the System Composition block of Figure 3;
**Figure 7** is a block diagram showing the UML activity of the composed system of

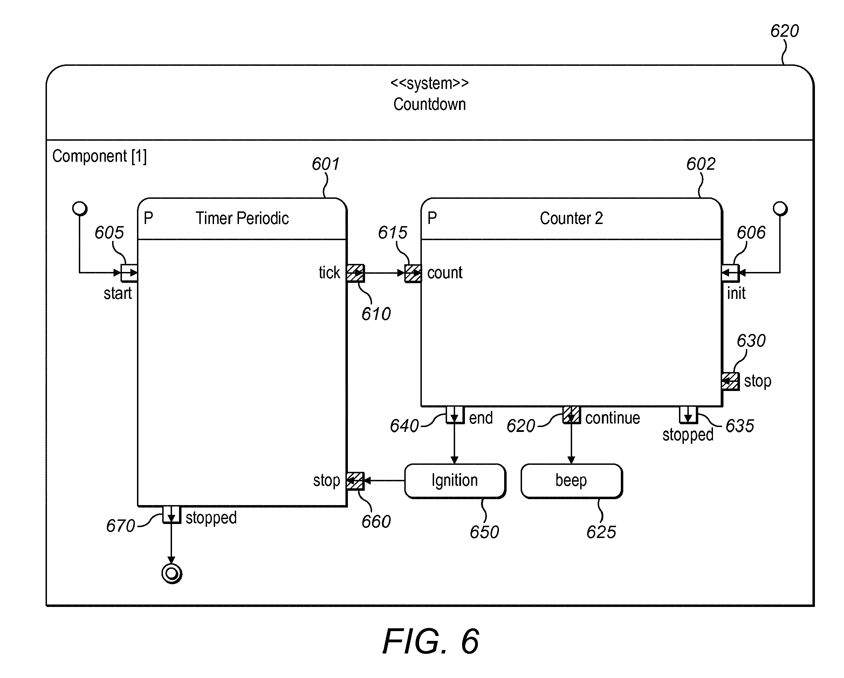

Figure 6 including the internal logic of the building blocks; and,

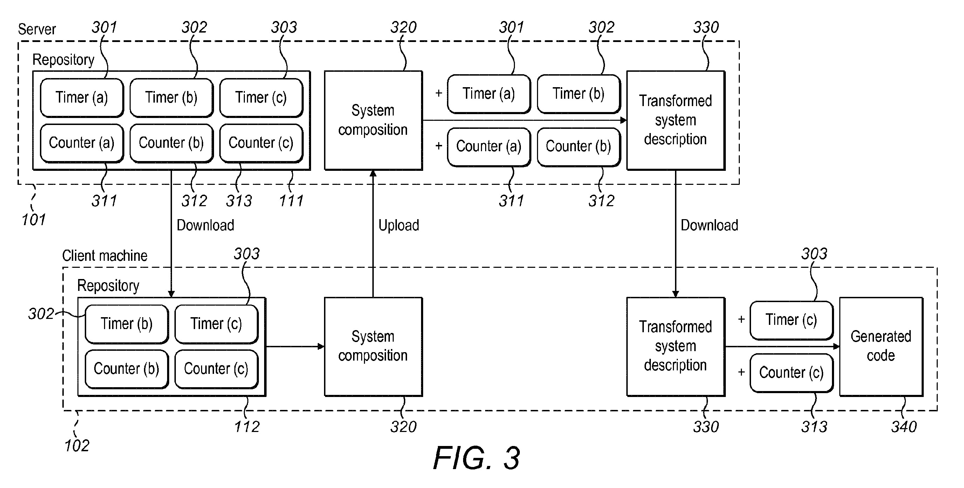

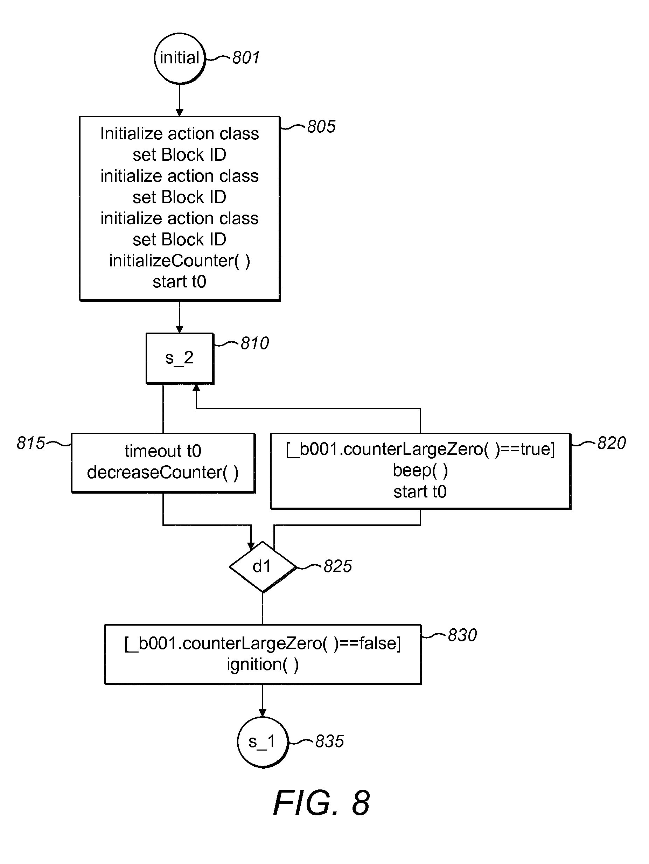

**Figure 8** is a flow chart showing a UML state machine in executable form of a transformed system produced by the server and represents the Transformed system description of Figure 3.

### DETAILED DESCRIPTION

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

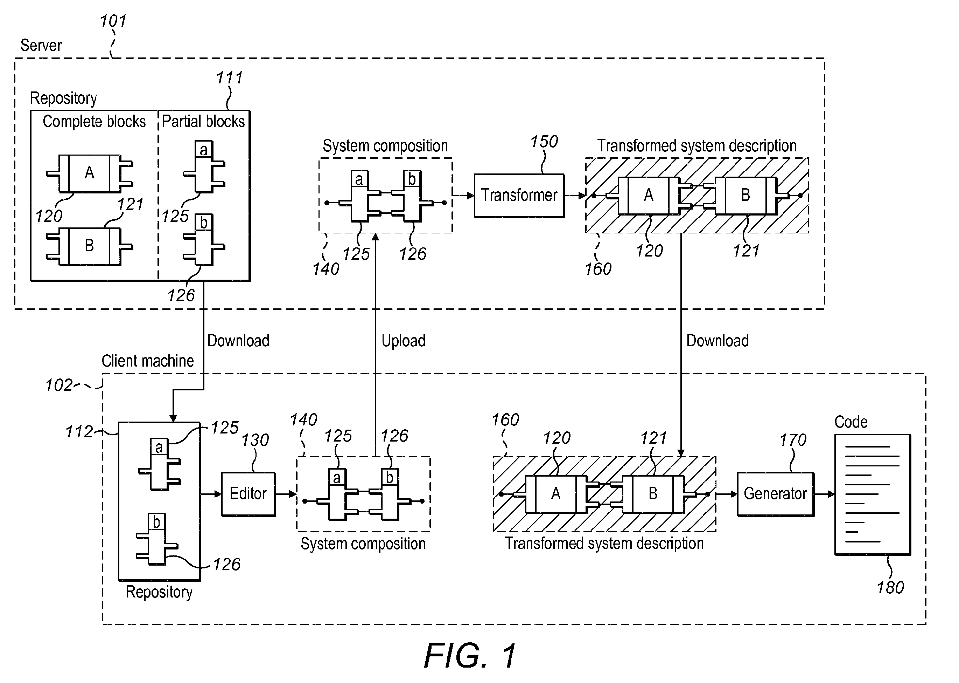

A block diagram of an example server 101 and client machine 102 interacting to generate code 180 is shown in Figure 1. The server includes a repository 111 and a transformer 150, and the client machine comprises its own repository 112, editor 130 and a generator 170.

The server repository 111 contains a number of building blocks 120 and 121. These building blocks are artefacts that describe partial programs for solving specific problems. For example, there may be a building block that can encrypt information, or a building block that can process certain sensor input, or a building block that acts as a timer. Building blocks can be connected with other building blocks to describe a multi-functioned software application that can perform actions in response to different events and logic. A complete building block may consist of an internal behaviour, a code description and an external interface and may therefore provide enough information to produce executable code from it. Blocks 120 and 121 are examples of such complete blocks and are stored within the repository 111 of the server 101.

From these complete blocks, partial blocks can be extracted. The partial blocks, for example blocks 125 and 126, may contain a subset of the information of their corresponding complete blocks 120 and 121 respectively. The partial blocks may consist of an external interface of the complete building block, and may also consist of a code description. The partial blocks may provide enough information to design a software application, but may not have the internal logic required to create a functioning, executable software application. As shown in the server repository 111, the partial block 125 indicates that it has a single input and two output terminals, showing how it can be connected with other blocks, but it does not contain the larger amount of internal logic of the corresponding complete block 120. The partial block may be referred to as an interface block as it describes how it can interface with other blocks, but does not contain all of the internal behaviour or internal code of the block. The partial block may also be referred to as a partial software building block. Similarly, a complete block may also be referred to as a complete software building block.

Some building blocks, referred to as composite building blocks, may be composed from other blocks, so may have a single external interface but a collection of the internal logic of a number of blocks. The blocks that a composite block consists of may be referred to as the constituent blocks of the composite building block.

The building blocks stored on the server repository 111 may have licenses associated with them. These licenses may indicate under what terms a software building block can be used when developing software applications. For example, the developer of a software building block may provide their building blocks to the server 101 so that other users may incorporate the blocks into their own software designs, but under the condition that the user pay a subscription fee to the developer for using their blocks. Such licenses may be associated with individual building blocks or with collections of building blocks, referred to as libraries.

These libraries may contain a number of building blocks, or may only contain individual building blocks. The libraries may contain building blocks that have related functions, such as a security library that contains encryption and decryption building blocks, or the libraries may contain building blocks associated with a particular product or company. Each of these libraries may have licenses associated with them defining the terms under which they can be used. There may also be libraries of partial blocks, also referred to as interface libraries, which are libraries containing the partial blocks associated with the complete blocks in the corresponding normal library.

In some embodiments, licenses are associated with entire libraries and not to individual building blocks. In such embodiments, only full libraries of building blocks and their corresponding interface libraries are stored on the server repository 111. In the examples provided in this application, building blocks are shown individually for ease of illustration, however, these building blocks may be representative of libraries, even if the libraries only contain a single building block.

A user on a client machine 102 may require access to some of the building blocks stored on the server repository 111. When a user requests access to the complete blocks 120 and 121, the server 101 may, in accordance with the license terms of the requested building blocks, only send the corresponding partial blocks 125 and 126 to the repository 112 of the client machine 102.

The user may then use the editor tool 130 provided on the client machine 102 to arrange the partial blocks into a system composition 140. A system composition is a tree structure of building blocks, with one system building block located at the root of the system. A system block is a self-contained block from which a complete system or application can eventually be generated. The system composition 140 of Figure 1, defines how the partial blocks 125 and 126 are connected to one another, and therefore illustrates how the system as a whole would run. In this example, a single input can be provided to the first partial block 125 and the result of both of its outputs are sent to the inputs of the second partial block 126 which then goes on to provide a final output.

Although the system composition 140 can describe the overall intended behaviour of the system, it contains partial blocks and so may not contain all the internal logic and code required to convert it into a fully-functioning, executable program.

Once the system composition 140 has been arranged in the client machine 102 with the editor 130, it is uploaded to the server 101. The uploaded system composition 140 is transformed by the transformer 150 into a transformed system description 160. The transformer 150 can take a system building block and all its constituent blocks and create a set of components from them. These components may be language-independent, like UML (unified modelling language) state machines in an executable form. As the transformed components in the transformed system description 160 can be language-independent, the transformer 150 may not require all the detailed code for the operations.

However, the transformer 150 does require the internal behaviours and the external interfaces of all the blocks in the system composition 140 to successfully complete the transformation. This may not be possible with the partial blocks as they may not contain all the internal behaviours of the building blocks. Therefore the server 101 replaces the partial blocks 125 and 126 of the uploaded system composition 140 with the corresponding complete blocks 120 and 121 that it already has access to in its repository 111. By replacing the partial blocks with complete blocks, the transformer 150 would have sufficient information to complete the transformation to the transformed system description 160. The replacement of partial blocks with complete blocks may be performed by the server 101 before the transformation at transformer 150, or it may be performed as part of the transformation process within the transformer 150.

As the client machine 102 does not have access to the complete blocks 120 and 121 that correspond to the partial blocks 125 and 126, it would not be possible for the client machine 102 to perform the transformation itself.

During the transformation process, the transformer 150 may separate out the arrangement of individual building blocks and rearrange them to form a combined, interweaved composition of building blocks designed. While the interconnections and workflows of the system composition 140 may have been formulated to provide a user with the clear representation of the functionality of the application, the aim of the transformer is produce the most efficient, event-driven implementation from the building blocks, with user readability at a lower priority.

The transformed system description 160 may be downloaded to the client machine 102. From here, the generator 170 can take the transformed system description 160 and create a complete, self-contained software application from it, comprising files with program code 180 and other resources. As the transformed system description 160 is language-independent, the single system description 160 can be used to create code for a number of different languages and thereby serve a number of platforms. The generator 170 can take the language-independent system description 160 and generate code for different target languages, such as Java and C++. There may be more than one generator 170 on the client machine 102, each one specialised for a different language or different variants of different languages. The source code 180 generated by the generator 170 may be modified and tweaked by the user to make small changes to the final source code before distributing the software application.

Although the client machine is provided with the transformed system description 160 which contains internal information about the complete blocks, because of the transformation process, where individual blocks are separated out and interweaved with one another to maximise execution efficiency, it would be difficult for the user to extract from the transformed system description 160 what the internal behaviours of the individual blocks were. This inhibits the possibility of creating a copy of the original complete block from the transformed system description 160. Therefore the transformer provides a form of obfuscation that makes it difficult to extract the original complete blocks from it. This type of indirect obfuscation is advantageous over earlier methods where the complete blocks may be provided to the user but sealed through obfuscation, as obfuscating the individual complete blocks would affect how they can be combined with one another and provide confusion at the design phase where clarity to the user is a key factor.

The embodiment described in Figure 1 shows how a user on a client machine 102 can produce a fully functional piece of source code, while at no point being provided with the complete software building blocks themselves. Therefore, a user can only perform a retransformation of the system through the server and in accordance with the license terms associated with the shared building blocks used. The user is, however, able to tweak or modify the generated source code itself which may not be possible if the entire source code were obfuscated by traditional means before being sent to the client machine 102.

Unlike with the proposed invention, in previous, known SDK technologies the user may be provided with copies of the complete software building blocks and therefore it would be possible for the user to use them in conflict with the license terms. For example the user may be able to continue to use a building block without a current, renewed license as the block may remain in their repository after the license has expired. The user may also be able to investigate the internal contents of the block which may not be desirable to owners of the blocks. Even if some form of DRM is incorporated into the building blocks of the previous SDK technologies, as the complete blocks are stored locally on the client machine 102, it may be possible for the user to temper with the protection mechanisms. The proposed solution can solve all of these problems by not providing the user with the complete blocks in the first place, but instead with partial blocks. The partial blocks provide enough information for the user to design their application, but not enough for them to execute them.

The proposed solution requires a trusted server to store shared building blocks and to enforce the licenses of them. Using a trusted server can provide further advantages, for example by using a centralised location for the transformer, the individual client machines do not have to be updated every time an improvement is made to the transformer. Furthermore, the transformer located on the server may reduce the amount of processing resources used by the user, especially where the designed system compositions are large and complex, and where the server has faster processing capabilities, can perform the task faster than the client machine. However, although servers are used in the proposed solution, the user is not overly reliant on them. The completed software application does not require any input from the server itself to run, as is the case for some DRM technologies, the server is only required for the development phase of the application. It is important that the user be free to run their software application on whatever system they choose, including those without internet access.

As mentioned in the discussion of Figure 1, the transformer 150 may provide some level of obfuscation to the completed blocks, making it difficult to extract the original complete blocks from the transformed system description 160, however, it may still be possible for a user to reverse engineer the complete blocks from the transformed system description 160 with some effort.

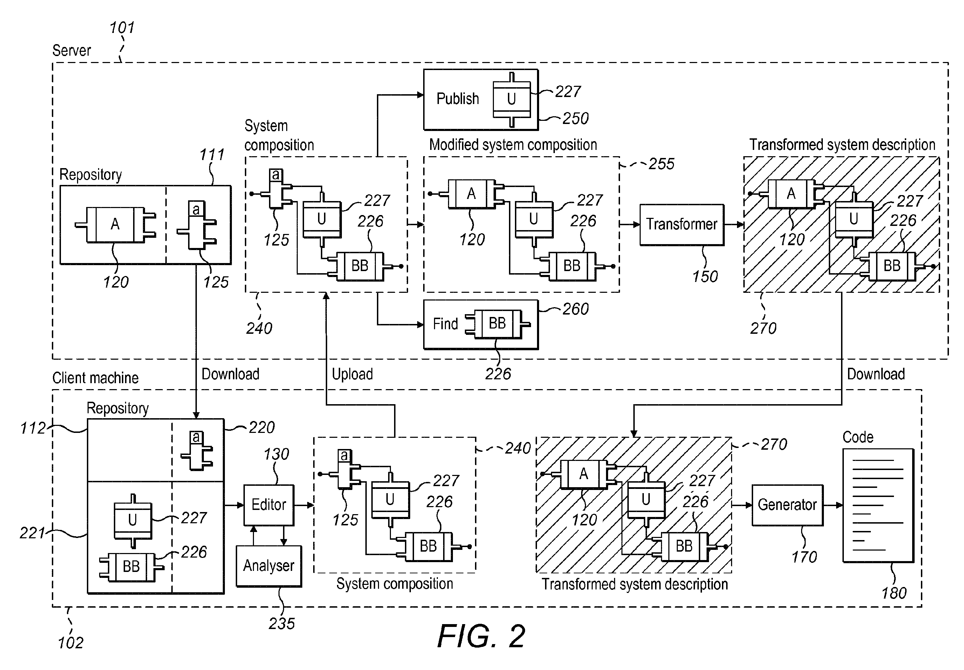

The embodiment illustrated in Figure 2 shows a way of preventing the misuse of blocks obtained through reverse engineering. Figure 2 illustrates a number of features that are in addition to or replacement of features shown in Figure 1. However, any one of the features shown or herein described in Figure 2 may be found in the embodiment disclosed in Figure 1. The scope of the claimed invention includes many of the features of Figure 1, but may also include any of the features described in relation to Figure 2.

Similar to Figure 1, Figure 2 is a block diagram showing an example server 101 and client machine 102 interacting to generate code 180. The server 101 contains a repository 111 and a transformer 150, and may also include means for publishing 250 and detecting 260 certain blocks. The client machine 102 contains a repository 112, an editor 130 and also includes an analyser 235.

The server repository 111 contains a complete block 120 and the corresponding partial block 125. The repository may contain many other blocks, but in this example only blocks 120 and 125 are required by the user and so only those are shown. Once the user requests access to the block 120, the partial block 125 is downloaded to the repository 112 of the client machine 102. The server repository 111 may be located in the server 101 itself, or the server 101 may simply have access to such a repository 111 that is located at a different location, for example the server repository 111 may be a data server that the server 101 has access to.

The client machine 102 may have two repositories, one where shared library interfaces are stored 220 and one where user-created or user-owned libraries are stored 221. A user may rely solely on shared libraries of data blocks made available by the server 101, or the user may also or instead use blocks that they have created or obtained themselves.

Complete block 227 is a block designed by the user to perform a task of interest to the user. On the other hand, the complete block 226, is a block that the user reverse engineered from a previously transformed system description and so may be a copy or similar to another block (such as block 121 from Figure 1). One of the terms of a user's license may be that they have to publish any blocks that they create using the SDK or in conjunction with a shared library. Another term of a user's license may be that they cannot copy or reverse engineer certain shared blocks that they use. The embodiment disclosed in Figure 2 shows a way of enforcing such license terms, and is discussed further in the description of block 260.

The editor 130 provides a tool for users to arrange building blocks, partial or complete, into systems. The editor 130 may also provide a way to create or modify user-created building blocks such as block 227. Such modifications may include editing the capabilities for the internal behaviour of a block, the detailed code in operations and the external interface of the block.

During the editing process or after, the analyser 235 may perform automatic checks. Such checks may include determining if the internal behaviour of a building block is consistent; checking if the internal behaviour of a building block correctly corresponds to the behaviour of its external interface; and, checking if all constituent blocks of a composite block are used consistently in a proper way, in other words, checking that they behave according to their interface description. By determining that these requirements are met, the analyser can ensure that the entire system will be consistent. Where the analyser determines any failures in these tests, it may determine a reason or a number of reasons why the property does not hold and may suggest a way to correct the deficiency.

Where an analyser attempts to analyse a partial block such as block 125, it may not be able to determine if the internal behaviour is in accordance with the external interface of the block, as it may not have access to the internal behaviour. However, as partial blocks originated from complete blocks located on the server 101, the analyser 235 does not need to perform such a check, as any blocks that are placed in the server repository 111 may have already had such checks made before being published as a shared block. The analyser 235 does, however, need to ensure that the behaviour of any complete block that the user creates is consistent with the interface description.

By performing these checks, the analyser 235 ensures not only that the user created blocks have been created correctly, but also that the arrangement of blocks by the user will result in a consistent and correctly implemented system. Importantly, the analyser 235 can perform this last check without knowing the internal behaviours of the blocks, but only the external interfaces which have already been checked to be consistent with the internal behaviours. The presence of an analyser should ensure that whatever is sent to the transformer 150 will result in a successful transformation.

Once the system composition 240 has been completed by the user and checked by the analyser 235, it may be uploaded to the server 101. In the system composition 240 of this example, the partial block 125 has its two outputs connected to the single input of the user block 227 and one of the outputs of the copied block 226. The output of the user block 227 is arranged to feed into the other input of the copied block 226 which has a final output.

When the system composition 240 is uploaded to the server 101 it may be converted to the transformed system description 270 by the transformer 150. Prior to performing the transformation, the server 101 may first replace all the partial blocks (in this case block 125) with their corresponding complete blocks stored in the repository 111 to result in a modified system composition 255 that is ready to be transformed by the transformer. Alternatively, the replacement of partial blocks with complete blocks may occur within the transformer 150 itself. When there are no partial blocks in the system composition, the transformer 150 only performs a transformation and does not perform any replacement of partial blocks.

In addition to the transformation step, the server 101 may also perform additional functions to the uploaded system composition 240. If the server 101 detects that a user-created block (such as block 227) has been uploaded and it determines that the license associated with the block or the user requires that the block is published, the server 101 may publish 227 the block automatically. Publishing the block may result in the block being added to the server repository 111 as a shared block or shared library so that other users may use the block in their own applications.

The server 101 may also be used to identify illegal duplicated or copied blocks. A user without a license may have obtained a copy of a block from a user that did have the appropriate license, or a user may have reverse engineered a complete block from a transformed system description or the corresponding generated code or the external interface itself. At step 260, the server may analyse each of the complete blocks uploaded in the system composition 240, compare them with blocks stored in the repository 111, and determine if any of the blocks may have been reverse engineered or copied from existing blocks located in the repository 111. If the server does detect a copied block, it may prevent the transformation of the system composition 240 or it may notify a third party that a potentially illegal duplicate has been detected.

The server repository may contain complete blocks (such as block 120) along with the corresponding partial block (for example block 125), or it may only contain the complete block and extract the partial block when it is required.

By placing the transformer 150 on the server 101 and requiring that the system composition 240 be uploaded to the server 101 before they can be converted to an executable form, it is possible to perform these further checks to the system composition and ensure compliance with license terms and policies.

The transformed system description 270 may then be downloaded to the client machine 102 where it can be used to generate a complete application code 180 by the generator 170.

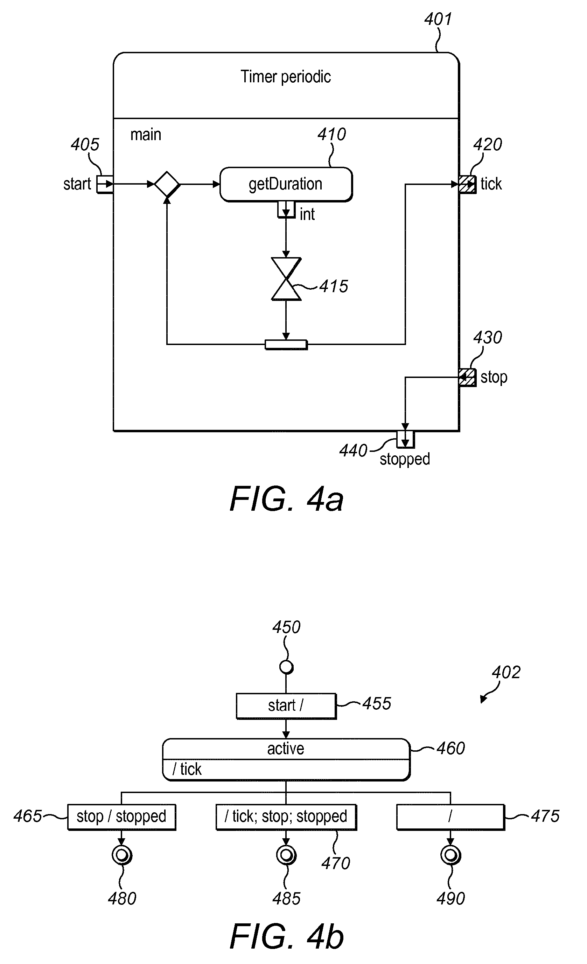

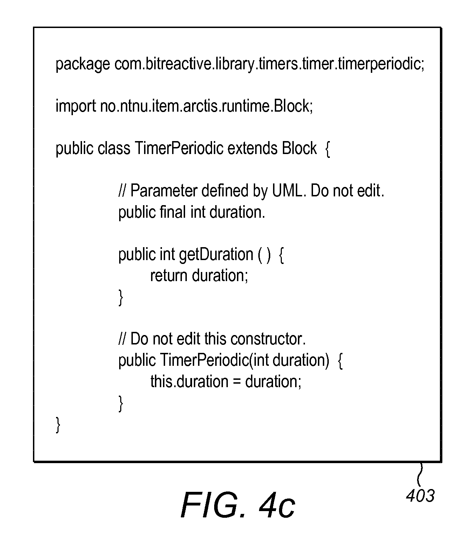

Figure 3 illustrates an example embodiment used for generating an example countdown software application. The example provides one possible implementation of the invention and, along with Figures 4 to 7, shows some of the individual steps involved. The server 101 and client machine 102 are each shown to contain repositories 111 and 112 respectively.

The server repository 111 contains three files associated with a Timer building block. The first file is a Timer(a) block 301, an example of which is illustrated in Figure 4a; the second file is a Timer(b) block 302, an example of which is illustrated in Figure 4b; and the third file is a Timer(c) block 303, an example of which is illustrated in Figure 4c. Here, the Timer(a) block 301 represents the internal behaviour of the Timer block, the Timer(b) block 302 represents the external interface, and the Timer(c) block 303 represents a code description for the Timer block.

The combination of the three files Timer(a) 301, Timer(b) 302 and Timer(c) 303, may be considered to be the complete block. Alternatively, the Timer(a) 301 block along together with the Timer(b) 302 block may be considered to be the complete block. As a final alternative, the Timer(a) 301 block alone may be considered the complete block as it contains the internal behaviours of the block. The partial block can be considered to be the external interface Timer(b) 302 block on its own or may also include the code description Timer(c) 303 block.

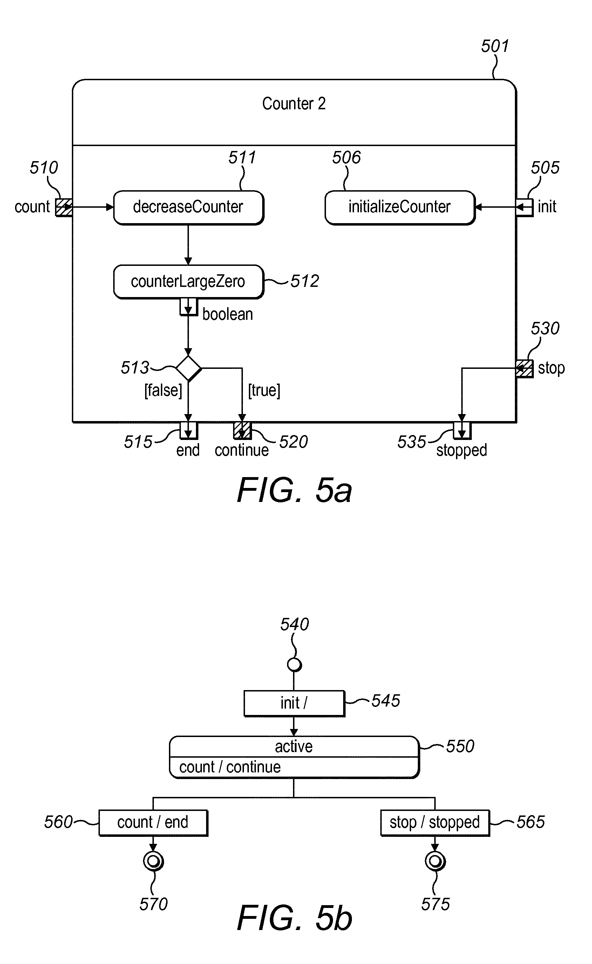

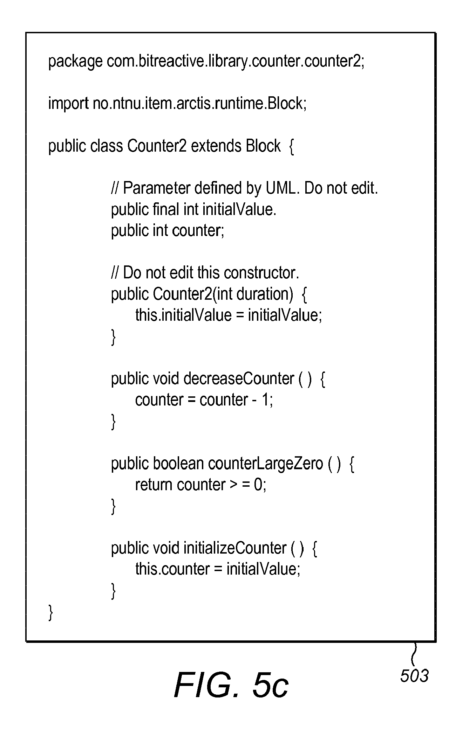

The server repository also contains three files associated with a Counter building block. The first file is a Counter(a) block 311, an example of which is illustrated in Figure 5a; the second file is a Counter(b) block 312, an example of which is illustrated in Figure 5b; and the third file is a Counter(c) block 313, an example of which is illustrated in Figure 5c. Here, the Counter(a) block 311 represents the internal behaviour of the Counter block, the Counter(b) block 312 represents the external interface, and the Counter(c) block 313 represents a code description for the Counter block.

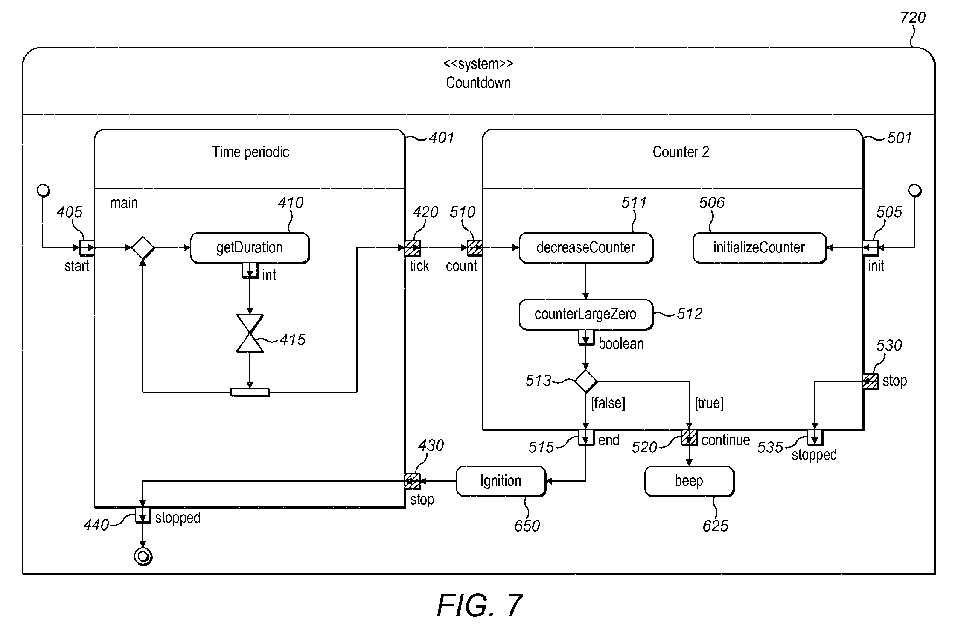

Timer(b) 302, Timer(c) 303, Counter(b) 312 and Counter(c) 313 blocks are downloaded to the client machine and are arranged into a system composition 320 by the user. The system composition 320, an example of which is illustrated in Figure 6, is uploaded to the server 320. The server transforms the system using the system composition 320, the blocks Timer(a) 301 and Counter(a) 311, and optionally the blocks Timer(b) 302 and Counter(b) 312. The transformed system description 330, an example of which is illustrated in Figure 7, is downloaded to the client machine 102. Here, along with the code descriptions Timer(c) 303 and Counter(c) 313, the transformed system description 330 is used to generate code 340.

Figure 4a shows the UML activity of a periodic timer building block 401 and is an example of a Timer(a) block 301 from Figure 3. This block contains information about the internal behaviour of the building block and is required for producing executable code based on the building block. The block 401 is shown to have a starting pin 405 and a terminating pin 440. There is also a streaming output 'tick' pin 420 which can be activated without causing the block to terminate. A streaming input 'stop' pin 430 is shown that can receive input even once the block has been initiated. On starting the block by activating the start pin 405, the getDuration function 410 is called and determines the duration of the periodic timer. This getDuration function 410 then passes this duration onto a timer 415 and sets it to send an output after the determined duration. Once the timer 415 has counted to this time it sends an output to the tick pin 420 and calls the getDuration 410 function again to repeat the process. The block can be stopped at any time by activating the stop pin 430. The block is represented as a UML activity diagram, however, the scope of the claimed invention is not limited to using UML. Instead, Timer(a) 301 can be any complete description of the internal workings of a block.

Figure 4b shows the external interface 402 of a periodic timer building block and is an example of a Timer(b) block 302 from Figure 3. In this example, the external interface is an external state machine (ESM) that describes the order in which parameters or pins can enter or exit the block. An ESM may be a state machine in a special form. The ESM allows a user to understand the coarse behaviour of the block, without knowing its internal details. The ESM can also be used by an analyser to ensure that blocks are integrated correctly, as the analyser does not need to know the internal workings of a block to check if the way its inputs and outputs are arranged with other blocks correctly.

From the initial state 450, the ESM 402 shows how the state can transition 455 to an active normal state 460 through activation of the start pin. While in the active state 460, the block can continue to activate the tick pin without having to exit the active state 460. However, upon receipt of a stop input, as shown in transition 465, the state transitions to a final stopped state 480. Alternatively, as shown in transition 470, where a tick output is triggered, followed by the receipt of a stop input, the state will transition to a final stopped state 485. One final alternative is the implicit termination shown at 475, which allows the block enclosing the Timer block to terminate while the Timer Periodic block is still in an active state, without having to invoke any parameter or pin of the block. The semantics used in this figure are based on the known semantics used for UML state machines. However, the scope of the claimed invention does not limit external interfaces to external state machines, as it can be any description of the overall behaviour of a system, without disclosing all the information that would be required for producing executable code.

Figure 4c shows a code description of a Timer block, and is an example of the Timer(c) block 303 shown in Figure 3. The contents of this block 403 are shown below:

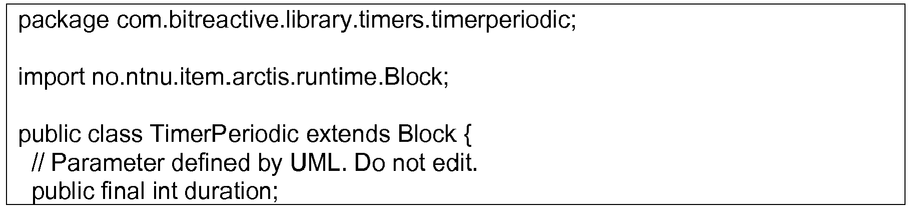

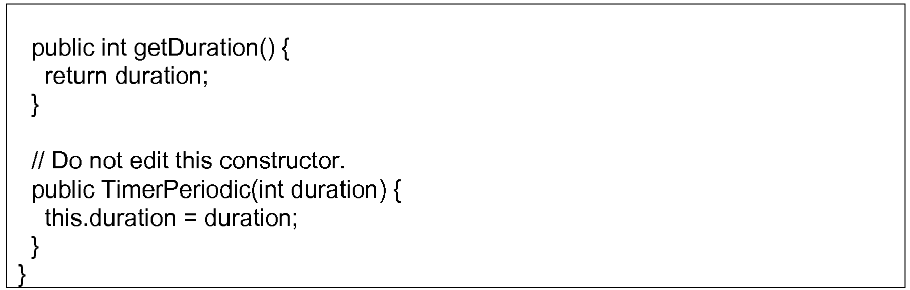

The Java code 403 shown in Figure 4c shows the code made available to the user. This code does not provide all the code for the internal workings of the Timer block, as it does not show any timer functions. Instead, it provides code for externally accessible functions of the block, such as the public TimerPeriodic() constructor or the public getDuration() function. This code can be modified by the user to allow for changes or tweaks to the block, without causing significant changes to the internal behaviour of the block. It is important in development systems that a user is able to make such changes and that the user is given some control over the system. If the SDK is made too closed, then although the intellectual property rights of block designers can be maintained, and although greater control can be provided to the SDK proprietor, the result would be a tool that is not as useful or attractive to an end user. Therefore, the user is able to modify and adapts bits of code, even those relating to shared blocks that the user does not own.

Figure 5a shows the UML activity of a counter building block 501 and is an example of a Counter(a) block 311 from Figure 3. The 'init' starting pin 505 can, upon activation, initialise the block and start the intializeCounter function 506. Once initialised, in response to an input at the 'count' streaming input pin 510, the decreaseCounter function 511 is called. This then leads to the counterLargeZero function 512 being activated that can output a boolean (true or false) as an output of the function. Where the output of the counterLargeZero function 512 is false, the end terminating pin is activated, terminating the block, and where the output is true, the 'continue' streaming output pin is activated, and the block 501 continues to remain active and receptive to further input.

Figure 5b shows the external interface of a counter building block and is an example of a Counter(b) block 312 from Figure 3. Like the external interface of Figure 4b, this external interface is represented as an external state machine. Here from an initial state 540, the block can transition 545 to an active state 550 through an activation of the 'init' pin. While in this active state 550, in response to an activation of the 'count' pin, the block can activate the 'continue' pin, without leaving the active state 550. While in this active state 550, upon receiving an input at the count pin, the state could transition 560 to a termination of the block 570. Alternatively, the block can be terminated 575 while in active state 550 by activating the stop pin as shown in transition 565. Although the ESM of Figure 5b, shows all the possible outcomes of this block, it does not provide any information about the internal workings, such as the decision going on in the counterLargeZero function 512, or the decreaseCounter function 511. The ESM only provides enough information to ensure that the block can be appropriately connected to other blocks, without resulting in errors through their interworking.

Figure 5c shows a code description of a Counter block, and is an example of the Counter(c) block 313 shown in Figure 3. The contents of this block 503 are shown below:

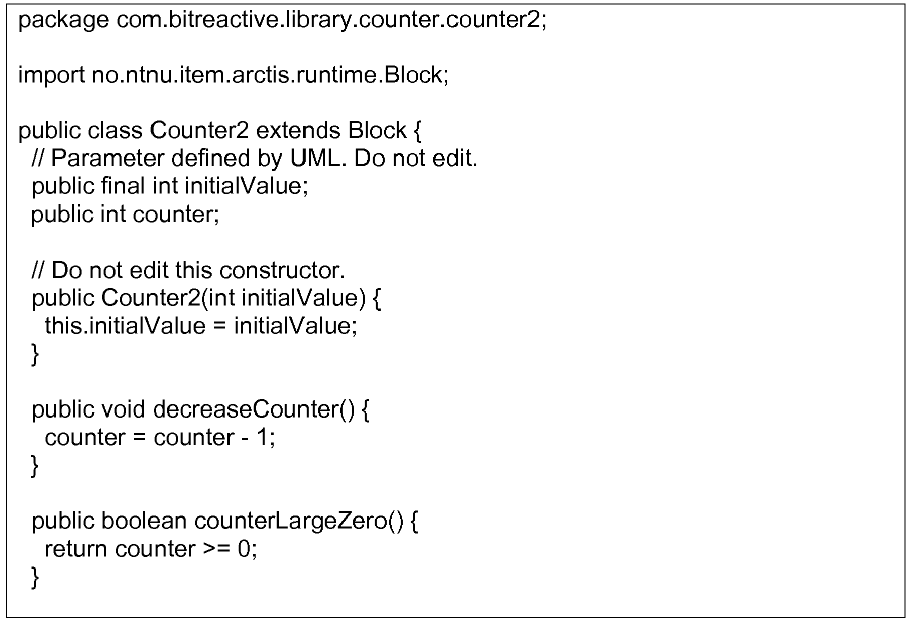

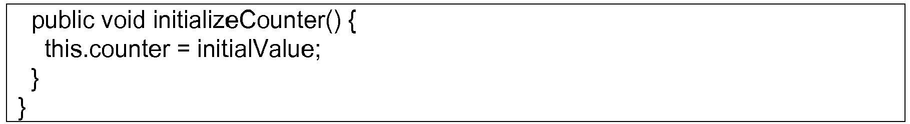

The Java code for operations 503 here also provides the user with some information regarding externally available functions that they may wish to use. For example the public constructor Counter2() function is available to activate, as are the public decreaseCounter(), counterLargeZero() and initializeCounter() functions. Providing access to such functions, allows the user to alter them. For example, the user may wish for the decreaseCounter() to half a count rather than subtract one each time. Such a change would not affect the external state machine of the block and so such a change would be permitted without causing any adverse effects on how the block can connect with other blocks. The code provided in this Java code provides the user with the flexibility to change certain aspects of the block when it is eventually used to generate code, but does not provide the entire inner workings of the block.

Figure 6 shows what a user may see when they arrange a system composition in an editor. The user has created a countdown system block 620 containing an arrangement of the Timer 601 and Counter 602 partial blocks. As the user did not receive the information of the internal behaviour of the blocks, the user can only see what information is provided by the external interfaces 302 and 312. The user may also access the Java code 303 and 313, either at this stage or at the later generator stage. Therefore the blocks 601 and 602 do not show the internal UML activity of the blocks. However, enough information is provided to the user to be able to design an application from these building blocks.

The user has arranged the system such that the Timer and Counter blocks 601 and 602 are initiated simultaneously by the start 605 and init 606 pins. Once the Counter block 602 is initialised, the user knows that it will be receptive to a count input or a stop input. From the description that the user has of the Timer block 601, the user knows that once activated it can send outputs to the tick pin 610, but can also be terminated by the stop pin 660. Without knowing the internal workings of the blocks, the user has been able to arrange the blocks in the editor such that after each tick from the periodic timer 601, the counter 602 counts down. As the counter 602 counts down, it activates the beep function 625 that the user may have incorporated themselves. When the counter 602 reaches the end of its countdown, rather than activating the beep function 625, it activates the ignition function 650, terminates itself and sends a stop 650 signal to the periodic timer 601 to cause it to terminate as well. The analyser is able to determine if the blocks have been connected together properly by using the external interface to check there are no possibilities that lie outside the possible outcomes set out by the external interfaces.

Once the system composition 620 is checked and uploaded to the server 101, the partial blocks can be replaced or filled in with the information the server 101 has available to it in the Timer(a) 301 and Counter(a) 311 blocks in its repository 11. Figure 7 shows the result 720 of incorporating the information in Timer(a) 301 and Counter(a) 311 blocks into the system composition 620.

In system block 720 the full interactions are shown and can be used, together with the external state machines 302 and 312 to form executable state machines. The internal workings shown in 720, for example the timer 415 in the timer block 401, are not available to the user on the client machine, and so the user cannot create executable code from the system composition 620 alone.

Figure 8 shows the result of a transformation of the full system composition 720. During this transformation, the entire system block has been analysed to determine the main states, transitions and functions that are performed within the system. The transformer 150 then creates a UML state machine in executable form, while ensuring this event-driven implementation is as efficient as possible.

From an initial state 801, three action classes and a counter are initialised, a timer is started and block IDs are set. While these actions were initially part of different building blocks, the transformer has incorporated these actions into a single step 805, as it has determined that these steps can all be performed together before reaching the s_2 state 810. From this s_2 state 810, when the timer completes (timeout t0), the counter is decreased and a transition is made to decision state 825. From this d1 decision state 825, the system can decide whether to return to the s_2 state 810 or go to the s_1 state 830. If the counter has not dropped to zero or below, transition 820 is used and a beep is initiated, the timer is reset and the state returns to the s_2 state 810. If, on the other hand, the counter is determined to be equal to or smaller than zero, the transition 830 is used and the ignition function is activated. Upon ignition, the state reaches the end s_1 state 835.

The transformer has converted the relatively complex system composition 720 into a simpler, more efficient system with only four possible states. As this transformed system description 330 is language-independent, when it is downloaded to the client machine it can be used to generate a number of different software applications for different target platforms and codes. To do so, different generators may be used for different target languages. The step of generating may be performed on the server itself.

The following code shows an example of the code output resulting from generating Java code from the UML state machine of Figure 8:

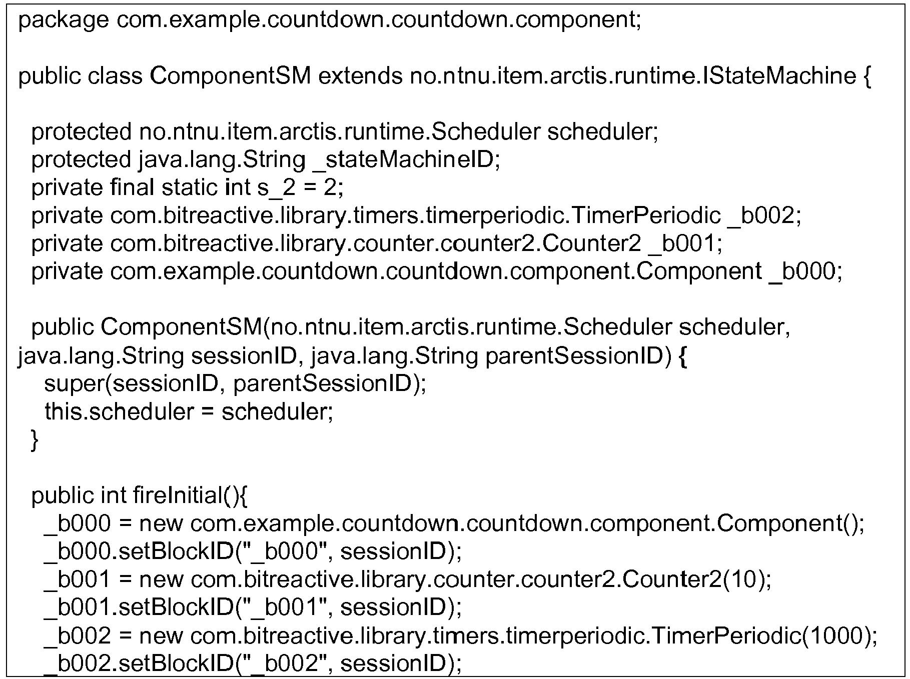

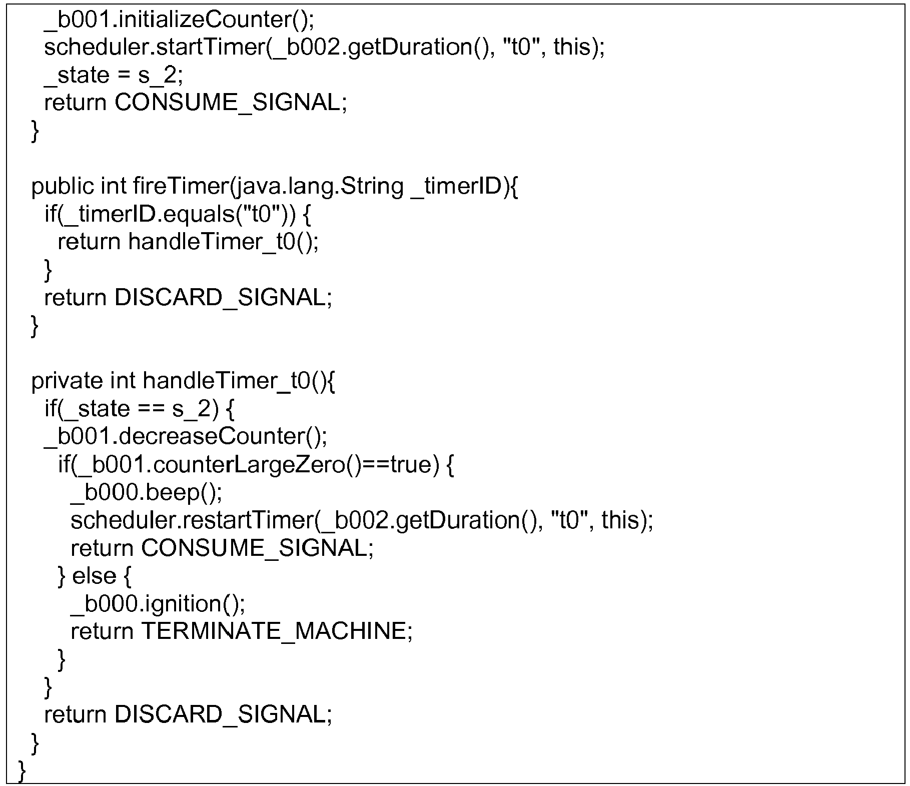

Although this code is based on complete blocks, it would not be straightforward for a user to reverse engineer and determine the original complete blocks from the code. The user can, however, perform further modifications to the code, as although the individual blocks are difficult to see in the code, the overall functioning of the code would be easily determined by the user and so they can sensibly make further modifications to the code as they see fit. Therefore, because of the proposed invention, the user maintains full control of the final source code and freedom to use it as they wish, while the intellectual property rights of the original block developer remains protected.

## Claims

1. A computer implemented method on a server, wherein the server has access to one or more complete software building blocks, each corresponding to a respective partial software building block, the method comprising:
receiving a system composition, the system composition including an arrangement of one or more partial software building blocks;
modifying said system composition by replacing said one or more partial software building blocks with their corresponding complete software building blocks;
transforming the modified system composition into a transformed system description; and,
submitting the transformed system description to a client machine.

2. The computer implemented method of claim 1, wherein prior to the receiving of a system composition:
submitting one or more partial software building blocks to the client machine, said submitted one or more partial software building blocks corresponding to one or more complete software building blocks requested by the client machine.

3. The computer implemented method of claim 1 or 2, wherein after the receiving of a system composition:
publishing one or more blocks in the system composition.

4. The computer implemented method of claim 3, wherein:
said publishing is determined by a license associated with the received system composition.

5. The computer implemented method of any preceding claim, wherein after the receiving of a system composition:
identifying any parts of the system composition that relate to protected complete software building blocks.

6. The computer implemented method of claim 5, further comprising:
if a license associated with the received system composition does not permit access to at least one of the protected complete software building blocks related to an identified part of the system composition, reporting said access to at least one of the protected complete software building blocks.

7. The computer implemented method of any preceding claim, wherein the received system composition is a system block comprising a hierarchy including one partial software building block and at least one of: one or more further partial software building blocks, and one or more complete software building blocks.

8. The computer implemented method of any preceding claim, wherein said partial software building blocks are external interfaces to their corresponding complete software building blocks.

9. The computer implemented method of any preceding claim, wherein the transformed system description is a description of the behaviour of the system.

10. The computer implemented method of any preceding claim, wherein the transformed system description is a UML state machine, the complete software building blocks are UML activities, and the partial software building blocks are external state machines.

11. A server comprising a memory storing executable instructions for performing the method of any preceding claim.

12. A computer implemented method on a client machine, the method comprising:
submitting a system composition to a server, the system composition including an arrangement of one or more partial software building blocks;
receiving a transformed system description from the server, the transformed system description being the result of a transformation on the submitted system composition, wherein the one or more partial software building blocks in the system composition have been replaced with their corresponding complete software building blocks; and,
generating code based on at least the transformed system description.

13. The computer implemented method of claim 12, wherein prior to submitting the system composition to the server, further comprising:
analysing the system composition to check for errors in the arrangement of the one or more partial software building blocks.

14. The computer implemented method of claim 12 or 13, wherein prior to submitting the system composition to the server, further comprising:
receiving one or more partial software building blocks from the server, said received one or more partial software building blocks corresponding to one or more requested complete software building blocks.

15. A client machine comprising a memory storing executable instructions for performing the method of any of claims 12 to 14.
